# EUROPEAN PATENT SPECIFICATION

(11) **EP 3 958 081 B1**
(45) Date of publication and mention of the grant of the patent: **06.03.2024**
(21) Application number: 20790751.0
(22) Date of filing: 16.04.2020
(51) Int. Cl.: G05D 1/00

(54) **USE OF A REMOTE OPERATION SYSTEM**
VERVENDUNG EINES FERNBEDIENUNGSSYSTEMS
UTILISATION D'UN SYSTÈME D'ACTIONNEMENT À DISTANCE

(30) Priority: 19.04.2019 JP 2019080394
(43) Date of publication of application: 23.02.2022
(73) Proprietor: IHI Corporation, Koto-ku Tokyo 135-8710 (JP)
(72) Inventor: EMOTO, Mai, Tokyo 135-8710 (JP)
(74) Representative: Marks & Clerk LLP
(86) International application number: PCT/JP2020/016660
(87) International publication number: WO 2020/213668

(56) References cited:
- WO-A1-2015/174526
- WO-A2-2011/002478
- JP-A- H 114 806
- JP-A- 2018 188 299
- US-A1- 2014 379 178

## Description

### [Technical Field]

The present disclosure relates to a remote operation device and a remote operation system.

Priority is claimed on Japanese Patent Application No. 2019-080394, filed April 19, 2019.

### [Background Art]

In the following Patent Document 1, a method of controlling an unmanned transport vehicle that automatically transports a container is disclosed. In the above control method, because a crane performs work of loading the container to the unmanned transport vehicle and unloading the container from the unmanned transport vehicle, the unmanned transport vehicle is moved to a work position. Patent Document 2 discloses a method of fine positioning of a vertical takeoff and landing vehicle. Patent Document 3 discloses a finger mounted remote control device capable of wirelessly transmitting a travel request signal to a materials handling vehicle.

### [Citation List]

### [Patent Document]

[Patent Document 1]
   Japanese Unexamined Patent Application, First Publication No. 2017-228198
[Patent Document 2]
   US Patent Application US 2014/379178
Patent Document 3]
   International Patent Application WO 2011/002478

### [Summary of Invention]

### [Technical Problem]

However, the accuracy of alignment of an unmanned transport vehicle with respect to a work position may be poor according to characteristics of the unmanned transport vehicle.

The present disclosure has been made in view of such circumstances and an objective of the present disclosure is to provide a remote operation device and a remote operation system capable of improving the accuracy of alignment of an unmanned transport vehicle with respect to a work position.

### [Solution to Problem]

The present application discloses a remote operation device for remotely operating a transport vehicle, the remote operation device including: a first operation unit; and a control unit configured to wirelessly transmit a command signal for causing the transport vehicle to travel a prescribed distance to the transport vehicle every time the first operation unit is operated.

Also, the first operation unit may include: a forward movement operation unit; and a backward movement operation unit. The control unit may wirelessly transmit a first command signal for causing the transport vehicle to move a first distance forward to the transport vehicle every time the forward movement operation unit is operated, and may wirelessly transmit a second command signal for causing the transport vehicle to move a second distance backward to the transport vehicle every time the backward movement operation unit is operated.

Also, the remote operation device may further include: a second operation unit configured to be able to adjust at least one of the first distance and the second distance.

According to the present invention there is disclosed the use of a remote operation system as defined in claim 1 as appended hereto. The remote operation system includes: a remote operation device configured to remotely operate a transport vehicle; and a control device mounted in the transport vehicle and configured to control traveling of the transport vehicle according to wireless communication with the remote operation device. The remote operation device includes: a first operation unit; and a control unit configured to wirelessly transmit a command signal for causing the transport vehicle to travel a prescribed distance to the transport vehicle every time the first operation unit is operated. The control device includes an actuator and a control unit. When the command signal has been received from the remote operation device according to the wireless communication and the actuator has acquired a control signal output from the control unit, the actuator operates a brake of the transport vehicle when a prescribed time period has elapsed after the actuator operates an accelerator of the transport vehicle by a prescribed amount, to stop the transport vehicle.

Also, in the aspect of the remote operation system of the present disclosure, the remote operation device may further include: a second operation unit configured to adjust the prescribed distance. The control unit may wirelessly transmit an operation signal based on an operation on the second operation unit to the control device. When the operation signal has been received from the remote operation device according to the wireless communication, the control device may adjust at least one of the prescribed amount and the prescribed time period in accordance with the operation signal.

In accordance with the present invention, the remote operation system further includes: a measurement device configured to measure a weight of a transport target object that is transported by the transport vehicle. The control device receives information about the weight measured by the measurement device according to communication and adjusts at least one of the prescribed amount and the prescribed time period on the basis of the weight that has been received.

### [Effects of Invention]

As described above, according to the present disclosure, it is possible to improve the accuracy of alignment of an unmanned transport vehicle with respect to a work position.

### [Brief Description of Drawings]

FIG. 1 is a diagram showing an example of a schematic configuration of a remote operation system A according to the present embodiment.
FIG. 2 is a schematic configuration diagram of a transport vehicle 1 according to the present embodiment.
FIG. 3 is a front view of a remote operation device 2 according to the present embodiment.
FIG. 4 is a main control block diagram of the remote operation device 2 according to the present embodiment.
FIG. 5 is a diagram showing an example of a schematic configuration diagram of a control device 3 according to the present embodiment.
FIG. 6 is a diagram for describing an alignment process for the transport vehicle 1 according to the present embodiment.
FIG. 7 is a diagram showing a modified example of the remote operation device 2 according to the present embodiment.
FIG. 8 is a diagram showing a modified example of the remote operation system A according to the present embodiment.

### [Description of Embodiments]

Hereinafter, a remote operation device and a remote operation system including the remote operation device according to the present embodiment will be described with reference to the drawings.

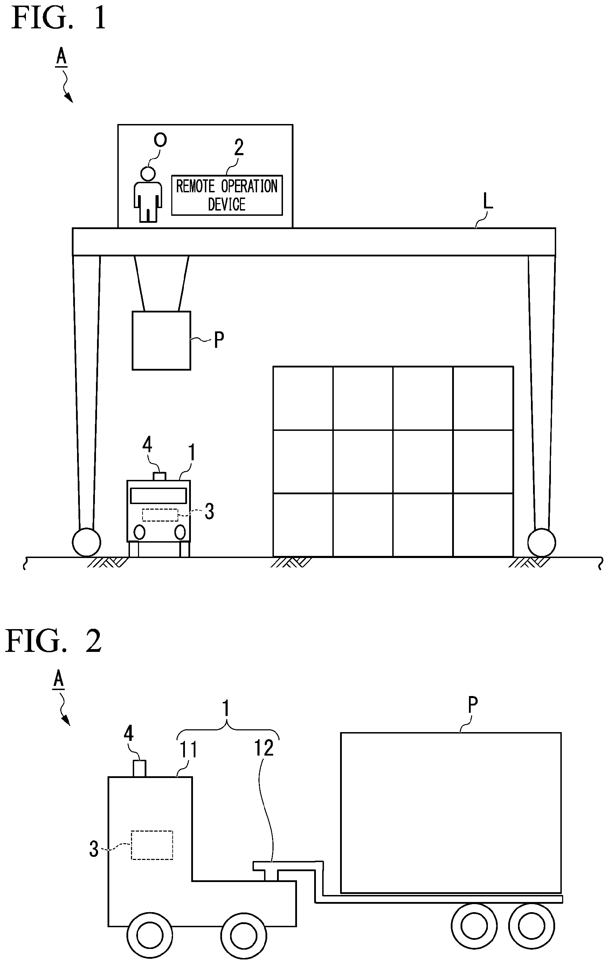

FIG. 1 is a diagram showing an example of a schematic configuration of a remote operation system A according to the present embodiment.

The remote operation system A aligns an unmanned transport vehicle 1 with a prescribed target position H_{M} or a position equivalent to the target position H_{M}. Also, in the following description, a process of aligning a position of the transport vehicle 1 with the prescribed target position H_{M} or the position equivalent to the target position H_{M} by causing the transport vehicle 1 to travel autonomously is simply referred to as "alignment of the transport vehicle 1."

The transport vehicle 1 is a vehicle that transports a transport target object to a target location. In the present embodiment, a case in which the transport vehicle 1 is a semi-trailer that transports the container P to a target location in a container yard such as a bay or an inland area will be described. However, the present disclosure is not limited thereto. For example, the transport vehicle 1 may be a full trailer or a construction vehicle that transports materials for use in dam body construction and embankment construction.

As shown in FIG. 2, the transport vehicle 1 includes a trailer head 11 (also referred to as a tractor) and a chassis (also referred to as a trailer) 12.

The chassis 12 is connected to the trailer head 11. The trailer head 11 travels in a state in which the chassis 12 is connected.

A container P is loaded to the chassis 12. The chassis 12 is towed by the trailer head 11 in a state in which the container P has been loaded.

In this way, in the transport vehicle 1 according to the present embodiment, the trailer head 11 and the chassis 12 are connected and the trailer head 11 travels with the container P loaded to the chassis 12. Thereby, the container P can be transported.

Here, the target position H_{M} according to the present embodiment may be any position where the transport vehicle 1 is stopped. The target position H_{M} is, for example, a designated stop position of the transport vehicle 1 when a crane L performs work of loading the container P to the chassis of the transport vehicle 1 that transports the container P and unloading the container P from the chassis of the transport vehicle 1 that transports the container P.

The crane L lifts the container P and loads the container P to the chassis 12 of the transport vehicle 1 stopped at the target position H_{M} (see FIG. 1). The crane L of the present embodiment is a gantry crane or a transfer crane. For example, a hanger device (i.e., a spreader) including a hanger for gripping the container P is attached to a lower end of a rope hanging from a trolley (that is not shown) of the crane L. The crane L lifts the container P in a state in which metal fittings provided at four corners of the container P are gripped and fixed by the hanger to load and unload the container P.

The remote operation system A according to the present embodiment will be described with reference back to FIG. 1.

The remote operation system A includes a remote operation device 2, a control device 3, and an indicator light 4.

The remote operation device 2 is a so-called remote controller that can remotely operate the transport vehicle 1 and is operated by a user when the transport vehicle 1 is aligned. The remote operation device 2 is connected to the control device 3 according to wireless communication. Here, for example, the above user is an operator O of the crane L. The operator O is a person who operates the crane L while standing by in a cabin of the crane L. However, the user is not limited to the operator O of the crane L. The user may be a person other than the operator O as long as the person is in charge of aligning the transport vehicle 1.

When the operator O operates the crane L to perform the work of loading and unloading the container P, alignment of the transport vehicle 1 is performed by operating the remote operation device 2.

The remote operation device 2 transmits a command signal based on an operation on the remote operation device 2 to the control device 3. Thereby, the remote operation device 2 can remotely finely adjust the position of the transport vehicle 1 in a traveling direction.

Also, the remote operation device 2 may be installed in the driver's cabin or may be a portable information terminal. Also, the remote operation device 2 may be a smartphone or a tablet terminal.

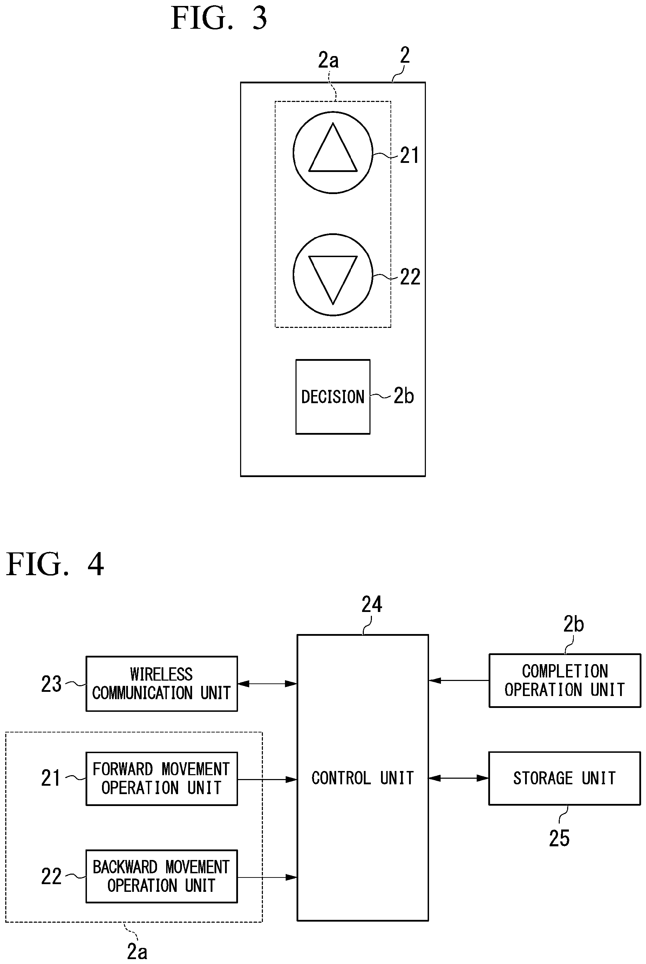

FIG. 3 is a front view of the remote operation device 2 according to the present embodiment. As shown in FIG. 3, a first operation unit 2a and a completion operation unit 2b are provided on a front surface of the remote operation device 2.

The first operation unit 2a is an operation unit that is operated by the user when the position of the transport vehicle 1 is finely adjusted.

The completion operation unit 2b is an operation unit that is operated by the user when an alignment processing mode (i.e., a fine position adjustment mode) of the transport vehicle 1 in the control device 3 is allowed to end. For example, the completion operation unit 2b is a push button switch.

The first operation unit 2a includes a forward movement operation unit 21 and a backward movement operation unit 22.

The forward movement operation unit 21 is an operation unit that is operated by the user when the transport vehicle 1 moves a first distance D1 forward. For example, the forward movement operation unit 21 is a push button switch.

The backward movement operation unit 22 is an operation unit that is operated by the user when the transport vehicle 1 moves a second distance D2 backward. Also, the first distance D1 may be the same as or different from the second distance D2. For example, the backward movement operation unit 22 is a push button switch.

FIG. 4 is a main control block diagram of the remote operation device 2 according to the present embodiment.

As shown in FIG. 4, the remote operation device 2 includes a first operation unit 2a (i.e., a forward movement operation unit 21 and backward movement operation unit 22), a completion operation unit 2b, a wireless communication unit 23, a control unit 24, and a storage unit 25.

The wireless communication unit 23 transmits a command signal by wirelessly communicating with the control device 3.

The control unit 24 wirelessly transmits one command signal for causing the transport vehicle 1 to travel a prescribed distance to the transport vehicle 1 via the wireless communication unit 23 every time the first operation unit 2a is operated (for example, a pressing operation).

Specifically, the control unit 24 wirelessly transmits a first command signal for causing the transport vehicle 1 to move the first distance D1 forward to the transport vehicle 1 via the wireless communication unit 23 every time the forward movement operation unit 21 is operated (for example, a pressing operation). The control unit 24 wirelessly transmits a second command signal for causing the transport vehicle 1 to move the second distance D2 backward to the transport vehicle 1 via the wireless communication unit 23 every time the backward movement operation unit 22 is operated.

The control unit 24 wirelessly transmits a completion signal to the transport vehicle 1 when the completion operation unit 2b is operated (for example, a pressing operation).

The control unit 24 may include a microprocessor such as a central processing unit (CPU) or a micro processing unit (MPU), a microcontroller such as a micro control unit (MCU), or the like.

The storage unit 25 is a non-volatile memory and various types of information are stored in the storage unit 25.

The control device 3 is mounted in the transport vehicle 1 (i.e., the trailer head 11) and controls the traveling of the transport vehicle 1 according to wireless communication with the remote operation device 2.

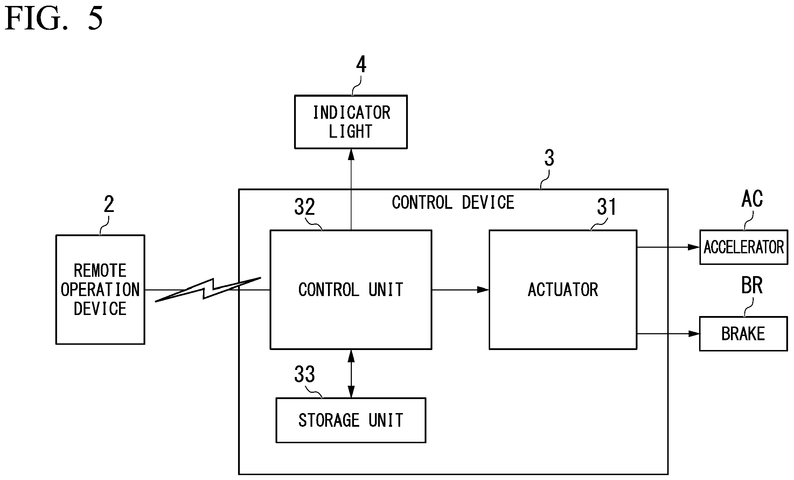

The control device 3 has a fine position adjustment mode. In the fine position adjustment mode, the alignment of the transport vehicle 1 is executed according to a command signal from the remote operation device 2. In the fine position adjustment mode, when one command signal has been received from the control unit 24 of the remote operation device 2 according to wireless communication, the control device 3 causes the transport vehicle 1 to be stopped by operating a brake BR of the transport vehicle 1 when a prescribed time period ΔT has elapsed after the accelerator AC of the transport vehicle 1 has been operated by a prescribed amount ΔP (see FIG. 5). Also, the prescribed amount ΔP is equal to or larger than an operation amount (for example, a depression amount) of the accelerator AC that allows the transport vehicle 1 to start traveling.

The display of the indicator light 4 is controlled by the control device 3 and the indicator light 4 is turned on and indicated in the fine position adjustment mode.

Hereinafter, an example of the schematic configuration of the control device 3 according to the present embodiment will be described with reference to FIG. 5. FIG. 5 is a diagram showing an example of a schematic configuration diagram of the control device 3 according to the present embodiment.

The control device 3 includes an actuator 31 and a control unit 32.

When a control signal output from the control unit 32 is acquired, the actuator 31 operates the accelerator AC of the trailer head 11 by the prescribed amount ΔP. Thereby, the transport vehicle 1 starts traveling in a forward direction or a backward direction. Also, when a stop signal output from the control unit 32 is acquired, the actuator 31 operates the brake BR of the trailer head 11 to stop the traveling of the transport vehicle 1 in the forward direction or the backward direction.

The control unit 32 has a function of wirelessly communicating with the wireless communication unit 23 of the remote operation device 2. When an alignment process for the transport vehicle 1 is executed, the control unit 32 transitions to the fine position adjustment mode, and maintains the fine position adjustment mode until the completion signal is received from the remote operation device 2. That is, when the alignment process for the transport vehicle 1 is executed, the control unit 32 transitions from the normal mode, which is a mode different from the fine position adjustment mode, to the fine position adjustment mode, and transitions from the fine position adjustment mode to the normal mode when the completion signal is received. Here, the normal mode is, for example, a mode in which automated driving of the transport vehicle 1 is executed (hereinafter referred to as an "automated driving mode").

The control unit 32 causes the indicator light 4 to be indicated in the fine position adjustment mode all the time.

When the first command signal is received from the remote operation device 2, the control unit 32 controls a shift lever so that the shift lever is in a D range, outputs a control signal to the actuator 31, and outputs a stop signal to the actuator 31 when the prescribed time period ΔT has elapsed after the control signal was output. Thereby, the transport vehicle 1 travels the first distance D1 forward. Therefore, when the operator O presses the forward movement operation unit 21 three times, in a state in which the shift lever is controlled so that the shift lever is in the D range, the control unit 32 iterates a process (i.e., the alignment process) of outputting the control signal to the actuator 31 and outputting the stop signal to the actuator 31 when the prescribed time period ΔT has elapsed after the control signal was output three times. As a result, the transport vehicle 1 moves a distance of (First Distance D1 × 3) forward.

When the second command signal is received from the remote operation device 2, the control unit 32 controls the shift lever so that the shift lever is in an R range, outputs the control signal to the actuator 31, and outputs the stop signal to the actuator 31 when the prescribed time period ΔT has elapsed after the control signal was output. Thereby, the transport vehicle 1 travels the second distance D2 backward. Therefore, when the operator O presses the backward movement operation unit 22 three times, in a state in which the shift lever is controlled so that the shift lever is in the R range, the control unit 32 iterates a process of outputting the control signal to the actuator 31 and outputting the stop signal to the actuator 31 when the prescribed time period ΔT has elapsed after the control signal was output three times. As a result, the transport vehicle 1 moves a distance of (Second Distance D2 × 3) backward.

The control unit 32 may include a microprocessor such as a CPU or an MPU, a microcontroller such as an MCU, or the like.

Also, the control device 3 of the present embodiment has a function of operating the shift lever. For example, the control device 3 may have an actuator for operating the shift lever (hereinafter referred to as a "shift actuator"). In this case, the control unit 32 controls the shift lever so that the shift lever is in the D range or the R range by controlling the shift actuator. However, the control device 3 is not limited to the above. It is sufficient for the control device 3 to have a function of switching between the forward movement and the backward movement of the transport vehicle 1. The control device 3 may electrically switch between the forward movement and the backward movement of the transport vehicle 1 according to CAN communication.

The storage unit 33 is a non-volatile memory and various types of information are stored in the storage unit 33. For example, the storage unit 33 stores information about the prescribed amount ΔP and the prescribed time period ΔT.

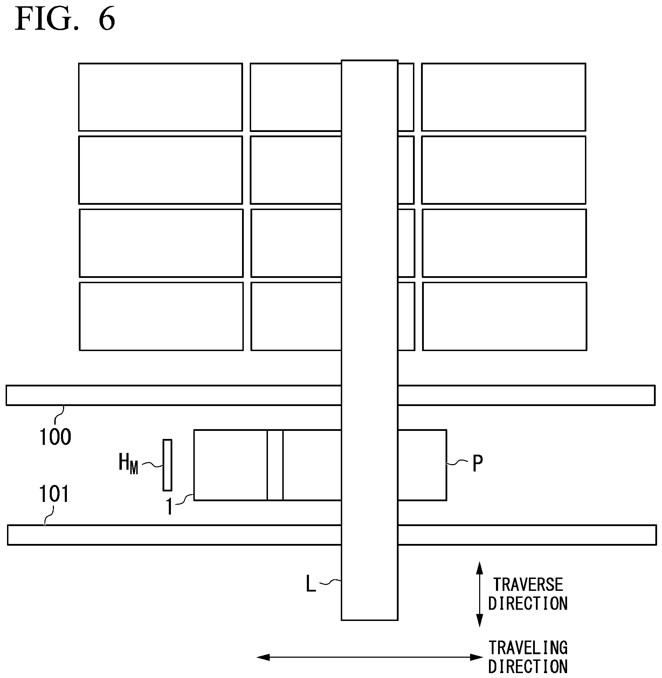

Next, the alignment process for the transport vehicle 1 in the remote operation system A will be described with reference to FIG. 6.

When the loading/unloading work of the crane L for the transport vehicle 1 is performed, the control device 3 causes the transport vehicle 1 to move to a stop position H1 near the crane L in the automated driving mode. When the transport vehicle 1 is moved to the stop position H1, the control device 3 causes the transport vehicle 1 to stop, and transitions to the fine position adjustment mode. The control device 3 causes the indicator light 4 to be turned on and indicated. Here, for example, the stop position H1 is a range between a white line 100 and a white line 101 and is not particularly limited as long as it is in the vicinity of the crane L. However, a traveling direction of the transport vehicle 1 may be a traveling direction of the crane L.

After the stopping of the transport vehicle 1 is visually confirmed with the indicator light 4, the operator O presses the forward movement operation unit 21 or the backward movement operation unit 22 so that the transport vehicle 1 is aligned with the target position H_{M}. For example, when the operator O presses the forward movement operation unit 21 once, the remote operation device 2 wirelessly transmits one first command signal to the control device 3. When the one first command signal is received, the control device 3 controls the shift so that the shift is in the D range, operates the accelerator AC by the prescribed amount ΔP, and operates the brake BR when the prescribed time period ΔT has elapsed from the operation. Thereby, the transport vehicle 1 travels the first distance D1 forward. On the other hand, when the operator O presses the backward movement operation unit 22 once, the remote operation device 2 wirelessly transmits one second command signal to the control device 3. When the one second command signal is received, the control device 3 controls the shift so that the shift is in the R range, operates the accelerator AC by the prescribed amount ΔP, and operates the brake BR with, for example, a maximum value of the operation amount by which the brake BR can be operated, when the prescribed time period ΔT has elapsed from the operation. Thereby, the transport vehicle 1 travels the second distance D2 backward.

The operator O moves the transport vehicle 1 to the target position H_{M} by operating the forward movement operation unit 21 or the backward movement operation unit 22 one or more times while visually confirming the target position H_{M} and the position of the transport vehicle 1. When the operator O can visually confirm that the transport vehicle 1 has reached the target position H_{M}, the loading/unloading work of the crane L is executed. When the loading/unloading work has been completed, the operator O presses the completion operation unit 2b. When the completion operation unit 2b is pressed, the remote operation device 2 wirelessly transmits the completion signal to the control device 3. When the completion signal has been received, the control device 3 transitions from the fine position adjustment mode to the automated driving mode, turns off the indicator light 4, and resumes autonomous driving along a prescribed traveling path.

Although embodiments of the present disclosure have been described above with reference to the drawings, specific configurations are not limited to the embodiments, and other designs and the like may also be included without departing from the scope of the present disclosure.

(Modified Example 1) Although the above-described control device 3 transitions to the fine position adjustment mode in response to stopping of the transport vehicle 1 at the stop position H1, the present disclosure is not limited thereto. That is, the control device 3 is not particularly limited with respect to a timing of transition to the fine position adjustment mode. For example, in the normal mode, the control device 3 may transition to the fine position adjustment mode at a timing when the command signal has been initially received.

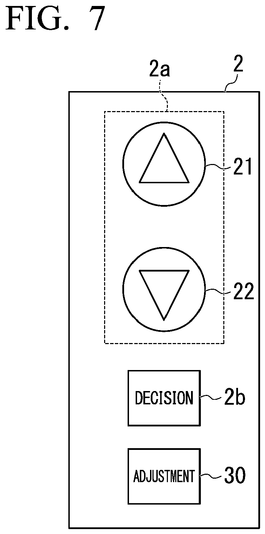

(Modified Example 2) As shown in FIG. 7, the above-described remote operation device 2 may further include a second operation unit 30 configured to be able to adjust at least one of the first distance D1 and the second distance D2. For example, when the second operation unit 30 is operated, the remote operation device 2 wirelessly transmits an operation signal based on the operation to the control device 3. For example, when the first distance D1 is shortened, the operator O performs a first operation on the second operation unit 30. When the first operation is detected on the second operation unit 30, the remote operation device 2 (i.e., the control unit 24) wirelessly transmits the first operation signal based on the first operation to the control device 3. On the other hand, when the first distance D1 is lengthened, the operator O performs a second operation on the second operation unit 30. When the second operation is detected on the second operation unit 30, the remote operation device 2 (the control unit 24) wirelessly transmits a second operation signal based on the second operation to the control device 3.

When the operation signal has been received from the remote operation device 2 according to wireless communication, the control device 3 adjusts a value of at least one of the prescribed amount ΔP and the prescribed time period ΔT in accordance with the operation signal.

For example, when the first operation signal has been received from the remote operation device 2 according to wireless communication, the control device 3 sets a value of at least one of the prescribed amount ΔP and the prescribed time period ΔT to become smaller by a prescribed value. For example, when the second operation signal has been received from the remote operation device 2 according to wireless communication, the control device 3 sets a value of at least one of the prescribed amount ΔP and the prescribed time period ΔT to become larger by a prescribed value.

(Modified Example 3) The remote operation device 2 may be a touch panel. In that case, the operation on the first operation unit 2a is a touch operation or a swipe operation. For example, in a case that the remote operation device 2 is a touch panel, when the transport vehicle 1 is allowed to move the first distance D1 forward, the operator O may perform the swipe operation on a screen of the remote operation device 2 in a first direction (hereinafter as to a "first swipe operation"). The above first swipe operation corresponds to an operation on the forward movement operation unit 21. Therefore, when the first swipe operation is detected, the control unit 24 wirelessly transmits the first command signal to the control device 3. That is, the control unit 24 wirelessly transmits the first command signal to the control device 3 every time the first swipe operation is performed.

On the other hand, when the transport vehicle 1 is allowed to move the second distance D2 backward, the operator O may perform a swipe operation on the screen (i.e., the first operation unit) of the remote operation device 2 in a second direction different from the first direction (hereinafter referred to as a "second swipe operation"). The above second swipe operation corresponds to an operation on the backward movement operation unit 22. Therefore, when the second swipe operation is detected, the control unit 24 wirelessly transmits the second command signal to the control device 3. That is, the control unit 24 wirelessly transmits the second command signal to the control device 3 every time the second swipe operation is performed.

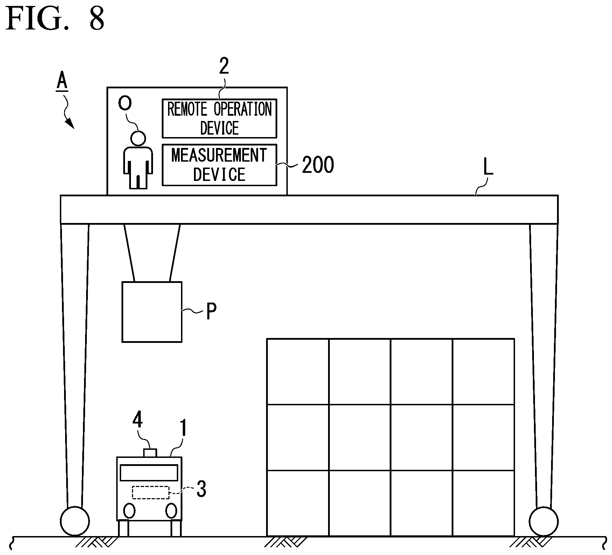

(Modified Example 4) As shown in FIG. 8, the above-described remote operation system A may further include a measurement device 200 configured to measure a weight of the container P of a transport target object that is transported by the transport vehicle 1. The measurement device 200 may be provided on the crane L.

For example, when the crane L lifts the container P and loads the container P to the chassis 12 of the transport vehicle 1, the measurement device 200 measures the weight (hereinafter referred to as a "container weight") Wc of the container P when the crane L has lifted the container P. For example, the measurement device 200 may measure the container weight Wc on the basis of a load applied to the four corners of the hanger. The measurement device 200 wirelessly transmits the measured container weight Wc to the control device 3.

The control device 3 (i.e., the control unit 32) may receive information about the container weight measured by the measurement device 200 directly from the measurement device 200 or via an external device. The control unit 32 may adjust at least one of the prescribed amount ΔP and the prescribed time period ΔT on the basis of the received container weight. For example, the control unit 32 may perform adjustment so that the prescribed amount ΔP increases, or may perform adjustment so that the prescribed time period ΔT increases, as the received container weight increases. Thereby, the first distance D1 and the second distance D2 can be kept constant for each alignment process regardless of the container weight.

Although the measurement device 200 measures the weight of the container P when the container P has been lifted by the crane L, the present disclosure is not limited thereto. That is, it is sufficient for the measurement device 200 to measure the weight of the container P that is transported by the transport vehicle 1, and a measurement method is not particularly limited. For example, the measurement device 200 may be a large platform scale and may be provided on a prescribed ground surface of a container yard (for example, the ground at a starting point). Further, for example, the measurement device 200 may be provided on the chassis 12 and may measure the weight of the container P when the container P has been loaded to the chassis 12. In this case, the measurement device 200 may transmit the container weight Wc to the control device 3 by wire.

(Modified Example 5) Although the remote operation system A includes a measurement device 200 for measuring the container weight in the above-described Modified Example 4, the present disclosure is not limited thereto. The remote operation system A may not include the measurement device 200. For example, the control device 3 (i.e., the control unit 32) may receive information about the container weight from an external device (such as a container management system of a container terminal). Normally, because a shipper declares the container weight in advance, the external device stores the information about the container weight obtained by the above declaration. Also, the alignment process using the container weight is similar to that of Modified Example 4.

(Modified Example 6) Although the operator O executes the loading/unloading work of the crane L after executing the alignment of the transport vehicle 1 in the above embodiment, the present embodiment is not limited thereto. For example, unless the hanger device of the transfer crane L is lowered to a prescribed position, the operator O of the transfer crane L may not be able to visually confirm from the position of the operator O that the position of the transport vehicle 1 has reached the target position H_{M}. Thus, when the transport vehicle 1 has moved to the stop position H1 near the crane L, the operator O may first lower the hanger device of the transfer crane L to a prescribed position. The operator O may execute the alignment of the transport vehicle 1 by pressing the forward movement operation unit 21 or the backward movement operation unit 22 after lowering the hanger device to a prescribed position. Therefore, it is sufficient for the loading/unloading work of the crane L of the present embodiment to include the work of gripping the container P with the hanger device and loading the container P to the chassis 12 and the work of gripping the container P loaded to the chassis 12 with the hanger device and moving the container P to a prescribed position. Thus, the work of lowering the hanger device to grip the container P with the hanger device may not be included in the loading/unloading work of the present embodiment.

Also, the lowering process of lowering the hanger device to a prescribed position may be executed by a manual operation of the operator O or may be automatically executed. For example, in executing the alignment of the transport vehicle 1, the control device 3 stops the transport vehicle 1 when the transport vehicle 1 is moved to the stop position H1, and transitions to the fine position adjustment mode. The control device 3 may cause the indicator light 4 to be turned on and indicated to notify a control device of the crane L (hereinafter referred to as a "crane control device") that the indicator light 4 has been turned on. When the notification is received, the crane control device may automatically perform a lowering process of lowering the hanger device to a prescribed position.

Also, the control device 3 may transition to the fine position adjustment mode in response to the lowering of the hanger device to a prescribed position. For example, the control device 3 provides a notification to the crane control device when the transport vehicle 1 is moved to the stop position H1. When the notification is received, the crane control device executes the lowering process. When the lowering process is completed, the crane control device notifies the control device 3 that the lowering process has been completed. When the control device 3 receives a notification indicating that the lowering process has been completed from the crane control device, the control device 3 transitions to the fine position adjustment mode.

As described above, the remote operation device 2 of the present embodiment includes the first operation unit and the remote operation device 2 wirelessly transmits a command signal for causing the transport vehicle 1 to travel a prescribed distance to the transport vehicle 1 every time the first operation unit is operated.

According to the above configuration, the user (for example, the operator O) can finely adjust the position of the transport vehicle 1 by operating the first operation unit. Therefore, the accuracy of alignment of the transport vehicle 1 with respect to the working position (for example, the target position H_{M}) can be improved. Also, relative positioning during loading/unloading between the manned crane L and the transport vehicle 1 of the automated driving is enabled.

All or a part of the above-described control unit 24 or 32 may be configured to be implemented in a computer. In this case, the above-described computer may include a processor such as a CPU or a GPU and a computer-readable recording medium. All or some functions of the control unit 24 or 32 may be implemented by recording a program for implementing the functions in a computer on a computer-readable recording medium and causing the above-described processor to read and execute the program recorded on the recording medium. Also, the "computer-readable recording medium" refers to a flexible disk, a magneto-optical disc, a read-only memory (ROM), a portable medium such as a compact disc (CD)-ROM, or a storage device such as a hard disk embedded in the computer system. Further, the "computer-readable recording medium" may include a computer-readable recording medium for dynamically retaining the program for a short time period as a communication line when the program is transmitted via a network such as the Internet or a communication circuit such as a telephone circuit, and a computer-readable recording medium for retaining the program for a given time period as in a volatile memory inside a computer system including a server and a client when the program is transmitted. Also, the above-described program may be a program for implementing some of the above-described functions. Further, the above-described program may be a program capable of implementing the above-described function in combination with a program already recorded on the computer system or may be a program implemented using a programmable logic device such as a field programmable gate array (i.e., FPGA).

### [Industrial Applicability]

By applying the remote operation device and the remote operation system of the present disclosure to the relevant field, it is possible to improve the accuracy of alignment of an unmanned transport vehicle with respect to a work position.

### [Reference Signs List]

A Remote operation system
1 Transport vehicle
2 Remote operation device
2a First operation unit
3 Control device
4 Indicator light
24 Control unit
21 Forward movement operation unit
22 Backward movement operation unit
30 Second operation unit
200 Measurement device

## Claims

1. Use of a remote operation system (A) comprising:
a remote operation device (2) configured to remotely operate a transport vehicle (1); and
a control device (3) mounted in the transport vehicle (1) and configured to control traveling of the transport vehicle (1) according to wireless communication with the remote operation device (2),
wherein the remote operation device (2) includes:
a first operation unit (2a); and
a control unit (24) configured to wirelessly transmit a command signal for causing the transport vehicle (1) to travel a prescribed distance to the transport vehicle (1) every time the first operation unit (2a) is operated, and
the control device (3) includes an actuator (31) and a control unit (32),
wherein when the command signal has been received from the remote operation device (2) according to the wireless communication and the actuator (31) has acquired a control signal output from the control unit (32) of the control device (3), the actuator (31) operates a brake of the transport vehicle (1) when a prescribed time period (ΔT) has elapsed after the actuator (31) operates an accelerator of the transport vehicle (1) by a prescribed amount (ΔP), to stop the transport vehicle (1),
**characterized in that**
the remote operation system (A) further includes:
a measurement device (200) configured to measure a weight of a transport target object (P) that is transported by the transport vehicle (1), and
wherein the control device (3) receives information about the weight measured by the measurement device (200) according to communication, and adjusts at least one of the prescribed amount (ΔP) and the prescribed time period (ΔT) on the basis of the weight that has been received.

2. Use of the remote operation system (A) according to claim 1,
wherein the remote operation device (2) further includes:
a second operation unit (30) configured to adjust the prescribed distance, and
the control unit (24) of the remote operation device (2) wirelessly transmits an operation signal based on an operation on the second operation unit (30) to the control device (3), and
when the operation signal has been received from the remote operation device (2) according to the wireless communication, the control device (3) adjusts at least one of the prescribed amount (ΔP) and the prescribed time period (ΔT) in accordance with the operation signal.

## Patentansprüche

1. Verwendung eines Fernbedienungssystems (A), das Folgendes umfasst:
eine Fernbedienungsvorrichtung (2), die zum Fernbedienen eines Transportfahrzeugs (1) konfiguriert ist; und
eine Steuervorrichtung (3), die in dem Transportfahrzeug (1) montiert und zum Steuern der Fahrt des Transportfahrzeugs (1) gemäß drahtloser Kommunikation mit der Fernbedienungsvorrichtung (2) konfiguriert ist,
wobei die Fernbedienungsvorrichtung (2) Folgendes einschließt:
eine erste Bedieneinheit (2a); und
eine Steuereinheit (24), die zum drahtlosen Übertragen eines Befehlssignals konfiguriert ist, um zu bewirken, dass das Transportfahrzeug (1) bei jeder Bedienung der ersten Bedieneinheit (2a) eine vorgeschriebene Distanz zu dem Transportfahrzeug (1) fährt, und
die Steuervorrichtung (3) einen Aktuator (31) und eine Steuereinheit (32) einschließt,
wobei, wenn das Befehlssignal von der Fernbedienungsvorrichtung (2) gemäß der drahtlosen Kommunikation empfangen wurde und der Aktuator (31) ein von der Steuereinheit (32) der Steuervorrichtung (3) ausgegebenes Steuersignal erfasst hat, der Aktuator (31) eine Bremse des Transportfahrzeugs (1) bedient, wenn eine vorgeschriebene Zeitspanne (ΔT) nach dem Bedienen eines Gaspedals des Transportfahrzeugs (1) um einen vorgeschriebenen Betrag (ΔP) durch den Aktuator (31) verstrichen ist, um das Transportfahrzeug (1) anzuhalten,
**dadurch gekennzeichnet, dass** das Fernbedienungssystem (A) ferner Folgendes einschließt:
eine Messvorrichtung (200), die zum Messen eines Gewichts eines von dem Transportfahrzeug (1) transportierten Transportzielobjekts (P) konfiguriert ist, und
wobei die Steuervorrichtung (3) Informationen über das von der Messvorrichtung (200) gemessene Gewicht gemäß einer Kommunikation empfängt und mindestens eines von dem vorgeschriebenen Betrag (ΔP) und der vorgeschriebenen Zeitdauer (ΔT) auf der Basis des empfangenen Gewichts justiert.

2. Verwendung des Fernbedienungssystems (A) nach Anspruch 1,
wobei die Fernbedienungsvorrichtung (2) ferner Folgendes einschließt:
eine zweite Bedienungseinheit (30), die zum Justieren der vorgeschriebenen Distanz konfiguriert ist, und die Steuereinheit (24) der Fernbedienungsvorrichtung (2) drahtlos ein Bedienungssignal auf der Basis einer Bedienung der zweiten Bedieneinheit (30) zum Steuervorrichtung (3) überträgt, und
wenn das Bedienungssignal von der Fernbedienungsvorrichtung (2) gemäß der drahtlosen Kommunikation empfangen wurde, die Steuervorrichtung (3) mindestens eines von dem vorgeschriebenen Betrag (ΔP) und der vorgeschriebenen Zeitdauer (ΔT)\ gemäß dem Bedienungssignal justiert.

## Revendications

1. Utilisation d'un système de commande à distance (A) comprenant :
un dispositif de commande à distance (2) configuré pour commander à distance un véhicule de transport (1) ; et
un dispositif de commande (3) monté dans le véhicule de transport (1) et configuré pour commander le déplacement du véhicule de transport (1) conformément à une communication sans fil avec le dispositif de commande à distance (2),
dans lequel le dispositif de commande à distance (2) inclut :
une première unité de fonctionnement (2a) ; et
une unité de commande (24) configurée pour transmettre sans fil un signal de commande pour amener le véhicule de transport (1) à parcourir une distance prescrite par rapport au véhicule de transport (1) à chaque fois que la première unité de fonctionnement (2a) est actionnée, et
le dispositif de commande (3) inclut un actionneur (31) et une unité de commande (32),
dans lequel lorsque le signal d'instruction a été reçu du dispositif de commande à distance (2) conformément à la communication sans fil et que l'actionneur (31) a acquis un signal d'instruction émis par l'unité de commande (32) du dispositif de commande (3), l'actionneur (31) actionne un frein du véhicule de transport (1) lorsqu'une période de temps prescrite (ΔT) s'est écoulée après que l'actionneur (31) a actionné un accélérateur du véhicule de transport (1) d'une quantité prescrite (ΔP), pour arrêter le véhicule de transport (1),
**caractérisée en ce que** le système de commande à distance (A) inclut en outre :
un dispositif de mesure (200) configuré pour mesurer le poids d'un objet cible (P) transporté par le véhicule de transport (1), et
dans lequel le dispositif de commande (3) reçoit des informations sur le poids mesuré par le dispositif de mesure (200) conformément à une communication, et ajuste au moins l'une de la quantité prescrite (ΔP) et de la période de temps prescrite (ΔT) sur la base du poids qui a été reçu.

2. Utilisation du système de commande à distance (A) selon la revendication 1,
dans lequel le dispositif de commande à distance (2) inclut en outre :
une deuxième unité de commande (30) configurée pour ajuster la distance prescrite, et l'unité de commande (24) du dispositif de commande à distance (2) transmet de manière sans fil un signal d'opération basé sur une opération de la deuxième unité de commande (30) au dispositif de commande (3), et
lorsque le signal d'opération a été reçu du dispositif de commande à distance (2) conformément à la communication sans fil, le dispositif de commande (3) ajuste au moins l'une des quantités prescrites (ΔP) et la période de temps prescrite (ΔT) conformément au signal d'opération.
